# EUROPÄISCHE PATENTANMELDUNG

(11) **EP 4 113 928 A1**
(43) Veröffentlichungstag der Anmeldung: **04.01.2023**
(21) Anmeldenummer: 21182334.9
(22) Anmeldetag: 29.06.2021
(51) Int. Cl.: H04L 29/06, H04L 29/08, H04L 9/32

(54) **LEITSYSTEM FÜR EINE TECHNISCHE ANLAGE UND VERFAHREN ZUM ÜBERMITTELN EINES ZERTIFIKATSANTRAGS EINER ANLAGENKOMPONENTE**

(71) Anmelder: Siemens Aktiengesellschaft, 80333 München (DE)
(72) Erfinder: Madsen, Marwin, 76131 Karlsruhe (DE); Palmin, Anna, 76187 Karlsruhe (DE)

(57) **Zusammenfassung**

Vorgeschlagen wird ein Leitsystem für eine technische Anlage, insbesondere eine Prozess- oder Fertigungsanlage, das einen computerimplementierten Registrierungsdienst (3) aufweist, wobei der Registrierungsdienst (3) dazu ausgebildet ist:
- von einer Anlagenkomponente (1) der technischen Anlage einen Zertifikatsantrag (2) entgegenzunehmen, der eine Information bezüglich einer Identität der Anlagenkomponente (1) umfasst,
- einem ersten Speicher (6) eine Information darüber zu entnehmen, welche Zertifikate der Anlagenkomponente (1) bereits zugewiesen, zuweisbar und zuzuweisen sind,
- anhand der Information bezüglich der Identität der Anlagenkomponente (1) und der Information über die zuweisbaren und zuzuweisenden Zertifikate zu bestimmen, welchen Typ der Zertifikatsantrag (2) aufweist und welche Registrierungsstelle (4) oder welche Zertifizierungsstelle (5a, 5b) der technischen Anlage für den Zertifikatsantrag (2) zuständig ist,
- den Zertifikatsantrag (2) der Anlagenkomponente (1) mit einer Information über den Typ des Zertifikatsantrags (2) an die zuständige Registrierungsstelle (4) oder die zuständige Zertifizierungsstelle (5a, 5b) zu übermitteln.

## Beschreibung

Die Erfindung betrifft Leitsystem für eine technische Anlage, insbesondere eine Prozess- oder Fertigungsanlage. Außerdem betrifft die Erfindung ein Verfahren zum Übermitteln eines Zertifikatsantrags von einer Anlagenkomponente einer technischen Anlage, insbesondere einer Prozess- oder Fertigungsanlage. Zudem betrifft die Erfindung die Verwendung eines Leitsystems zum Betrieb einer technischen Anlage.

Aufgrund des (durch die zunehmende Verwendung von offenen IT-Standards und -Protokolle) steigenden Schutzbedarfs und der Anforderungen der IEC 62443 als des führenden Industrial Security Standards müssen die Kommunikationsverbindungen in Leitsystemen technischer Anlagen zunehmend abgesichert, d.h. gegen unberechtigte Zugriffe angemessen geschützt werden.

Ein angemessener Schutz kann insbesondere - je nach Ergebnissen einer sog. Threat and Risk Analyse (TRA) - die Verschlüsselung und/ oder die Authentifizierung der übertragenen Daten umfassen. Entsprechende Verschlüsselungs- und Authentifizierungsmechanismen sind in der Regel ein Bestandteil sicherer Kommunikationsprotokolle (wie z.B. TLS, OPC UA). Der Einsatz sicherer Kommunikationsprotokollen setzt voraus, dass die Kommunikationsteilnehmer über digitale Zertifikate verfügen.

Die Zertifikate, die in einer operativen Umgebung (wie z.B. einer industriellen Anlage) eingesetzt werden, um beispielsweise sichere Kommunikation oder Benutzerauthentifizierung zu ermöglichen, bezeichnet man in der Regel als sogenannte "operative Zertifikate" (engl. Operational Certificates, OC). Aus Security-Gründen ist es empfehlenswert, ein dediziertes operatives Zertifikat pro verwendetes Kommunikationsprotokoll zu nutzen. Dies bedeutet, dass, falls eine Anlagenkomponente beispielsweise OPC UA zur Absicherung einer Kommunikationsbeziehung und TLS zur Absicherung einer anderen Kommunikationsbeziehung nutzt, die Komponente jeweils ein OPC UA-Zertifikat und ein TLS-Zertifikat benötigt (für die TLS-Server oder die TLS-Client-Authentifizierung). Ist die Menge von Anlagenkomponenten und somit der benötigten operativen Zertifikate klein, können die Zertifikate manuell in die Anlagenkomponenten importiert werden.

Mit einer steigenden Anzahl von Anlagenkomponenten, die in sichere Kommunikationsbeziehungen involviert sind und diverse Zertifikate benötigen, ist es sinnvoll, das Ausstellen von operativen Zertifikaten - basierend auf den von den Anlagenkomponenten generierten Zertifikatsanträgen (engl. Certificate Requests, CR) - sowie die Zuweisung der ausgestellten Zertifikate den Komponenten zu automatisieren. Ein derartiges automatisiertes Zertifikatsmanagement setzt in der Regel eine sog. Public Key Infrastruktur (PKI) voraus, die in der jeweiligen operativen Umgebung (z.B. einer industriellen Anlage) vorhanden sein soll.

Ein bekannter Ablauf zum Beantragen und zum Ausstellen der operativen Zertifikate lässt sich wie folgt beschreiben: Die Anlagenkomponenten richten ihre Zertifikatsanträge (engl. Certificate Requests bzw. Certificate Signing Requests, CSR) an die sogenannte Registrierungsstelle (engl. Registration Authority oder kurz: RA), die die Anträge validiert (indem sie in Rücksprache mit einem Speicher bzw. Inventory prüft, ob die jeweilige Komponente ein Zertifikat bekommen darf) und die Zertifikatsanträge dann - signiert mit ihrem eigenen Geheimschlüssel - an die zuständige Zertifizierungsstelle (engl. Certification Authority oder kurz: CA), die auch als "Issuing CA" bezeichnet wird, weiterleitet.

Die Zertifizierungsstelle prüft die Signatur unter den Zertifikatsanträgen unter Verwendung des ihr vorliegenden öffentlichen Schlüssels der Registrierungsstelle. Anschließend stellt sie die Zertifikate aus und übermittelt sie an die Registrierungsstelle, die sie dann auf Gültigkeit prüft und an die Komponenten-Antragsteller weiterleitet.

Damit die Anlagenkomponenten sich mit den Komponenten der verwendeten Public Key Infrastruktur optimal "verständigen" können, werden in diesen Komponenten immer häufiger Zertifikatsmanagement-Protokolle wie z.B. das "Certificate Management Protocol (CMP)" nach RFC 4210 bzw. nach dem "Lightweight CMP Profile" implementiert. Unter Verwendung derartiger Protokolle können diverse Szenarien (wie beispielsweise initiale Beantragung eines operativen Zertifikats zu einem bestimmten Zweck oder die Beantragung einer Erneuerung eines zu einem bestimmten Zweck bereits vorhandenen operativen Zertifikats) unterschieden werden. Außerdem eignen sich derartige Protokolle dazu, verschiedene Arten von Zertifikaten zu beantragen, denn in den meisten Fällen ist es empfehlenswert, vor der Beantragung von applikationsspezifischen operativen Zertifikaten die Anlagenkomponenten mit den anlagengebundenen Kundenzertifikaten (engl. Customer Device Certificate, kurz: CDC), die die Komponenten an die Kundenanlage binden (wie ein Mitarbeiterausweis die Mitarbeiter an ein Unternehmen binden) auszustatten und diese dann als Basis für die Beantragung eines operativen Zertifikats zu nutzen.

Beispielsweise bei der Verwendung des CMP-Protokolls und des zugehörigen CRMF-Formats erfolgt die CDC-Beantragung unter Verwendung der CMP-Nachrichtentyps "Initial Request". Für die anschließende Beantragung von erforderlichen operativen Zertifikaten wird der CMP-Nachrichtentyp "Certificate Request" verwendet, während die Erneuerung eines CDC oder eines OC unter Verwendung des CMP-Nachrichtentyps "Key Update Request" (kur) erfolgt, wobei der jeweilige Antrag unter Verwendung des zu erneuernden Zertifikats (genauer gesagt des zugehörigen Private Key) signiert wird und die die ID (z.B. die Seriennummer) des Zertifikats sowie bei Bedarf auch den Namen der zu adressierenden Zertifizierungsstelle (als Wert des Parameters "Recipient") beinhaltet. Somit können alle o.g. Szenarien - ohne jegliche Mitwirkung des Benutzers - komplett automatisiert werden.

Aufgrund der Implementierung von intelligenten Zertifikatsmanagement-Protokollen müssen die Anlagenkomponenten intelligenter werden, um beispielsweise selbst entscheiden zu können, ob ein operatives Zertifikat (oder genauer gesagt das zugehörige Schlüsselpaar) nun erneuert werden soll (weil das operative Zertifikat in Kürze abläuft), oder ob ein operatives Zertifikat aus einem bestimmten Grund revoziert werden soll. In den heutigen, in der Regel im Hinblick auf die verwendeten Mechanismen zum Zertifikatsmanagement heterogen gestalteten industriellen Anlagen unterstützt die Mehrheit der industriellen Endgeräte (wenn überhaupt) nur die einfachsten Zertifikatsmechanismen und kann beispielsweise nur einen Zertifikatsantrag zu einem (selbst generierten oder von einer anderen Instanz stellvertretend generierten) Schlüsselpaar in einem sog. PKCS#10-Format nach RFC 2986 selbst generieren oder (stellvertretend) von einem Benutzer (z.B. unter Verwendung von OpenSSL) generieren lassen.

Ein derartiger, mit einem Geheimschlüssel (engl. Private Key) signierter Zertifikatsantrag samt dem zugehörigen öffentlichen Schlüssel (engl. Public Key) kann (beispielsweise in Form einer PEM-Datei) auf einem beliebigen Transportweg (beispielsweise auf einem USB-Stick) an eine Zertifizierungsstelle übermittelt werden. Die Zertifizierungsstelle stellt daraufhin - basierend auf dem Zertifikatsantrag - ein Zertifikat aus, welches u.a. die im Zertifikatsantrag enthaltenen, auf den Auftragsteller bezogenen Informationen, und dessen Public Key beinhaltet.

Das Zertifikat kann ebenfalls auf verschiedenen Wegen dem Antragsteller zugestellt werden, der dieses dann gemäß dem RFC 5280 validiert und dabei u.a. prüft, ob der Public Key korrekt ist (wodurch ein sog. Proof of Possession erbracht wird) und ob bestimmte Zertifikatsinhalte (insb. ein sog. "Distinguished Name") mit den Inhalten des Antrags übereinstimmen.

Komplexere Szenarien (wie beispielsweise der Beantragung von operativen Zertifikaten basierend auf einem CDC oder die Beantragung einer CDC-/OC-Erneuerung) unter Verwendung von "einfacheren" Formaten wie z.B. PKCS#10 können aktuell aus den o.g. Gründen nicht (bzw. nicht ohne Mitwirkung des Benutzers) abgebildet werden. Durch die Mitwirkung des Benutzers wird jedoch die Wahrscheinlichkeit von versehentlichen oder absichtlichen Fehlern erhöht. Dadurch können der Normalbetrieb und die Verfügbarkeit der industriellen Anlagen gefährdet werden. Auch für den Fall, dass sich keine Fehler ereignen, kann die Gefahr der Verzögerungen aufgrund der notwendigen manuellen Eingriffe stark erhöht sein.

Falls nun ein Zertifikatsantrag im (gängigen) PKCS#10-Format von einer Anlagenkomponente selbst oder (stellvertretend) von einem Benutzer erstellt und nicht unter Verwendung eines intelligenten Zertifikatsmanagement-Protokolls (wie z.B. CMP), sondern auf einem einfacheren Weg wie z.B. auf einem USB-Stick, übertragen wird, beinhaltet ein derartiger Antrag in der Regel keinen Hinweis, ob es sich bei diesem Antrag um eine initiale Beantragung oder um ein Update eines Zertifikats (z.B. eines CDC oder eines operativen Zertifikats) handelt.

Auch die ggf. vorgegebene Reihenfolge, in welcher bestimmte Zertifikate in einer Anlage zu beantragen sind ist in einem derartigen Zertifikatsantrag nicht direkt abbildbar. Somit sind solche Zertifikatsanträge durch eine Registrierungsstelle oder eine Zertifizierungsstelle nur als initiale Zertifikatsanträge interpretierbar. Insbesondere kann eine Registrierungsstelle bei mehreren vorhandenen Zertifizierungsstellen dabei nicht anhand der Inhalte des Zertifikatsantrags entscheiden, für welche Zertifizierungsstelle dieser Zertifizierungsantrag bestimmt ist.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Mehrzahl an Zertifizierungsstellen.

Der Erfindung liegt die Aufgabe zugrunde, ein Leitsystem für eine technische Anlage anzugeben, welches ein Zertifikatsmanagement hinsichtlich einfacher Anlagenkomponenten der technischen Anlage deutlich erleichtert und sicherer gestaltet.

Diese Aufgabe wird gelöst durch eine Registrierungsstelle für ein Leitsystem einer technischen Anlage, insbesondere eine Fertigungs- oder Prozessanlage, mit den Merkmalen des Anspruchs 1. Außerdem wird die Aufgabe gelöst durch ein Verfahren zum Übermitteln eines Zertifikatsantrags von einer Anlagenkomponente einer technischen Anlage, insbesondere einer Prozess- oder Fertigungsanlage, mit den Merkmalen des Anspruchs 9. Zudem wird die Aufgabe gelöst durch eine Verwendung eines Leitsystems gemäß Anspruch 17. Vorteilhafte Weiterbildungen ergeben sich aus den abhängigen Ansprüchen.

Ein erfindungsgemäßes Leitsystem für eine technische Anlage weist einen computerimplementierten Registrierungsdienst auf, der dazu ausgebildet ist:
- von einer Anlagenkomponente der technischen Anlage einen Zertifikatsantrag entgegenzunehmen, der eine Information bezüglich einer Identität der Anlagenkomponente umfasst,
- einem ersten Speicher eine Information darüber zu entnehmen, welche Zertifikate der Anlagenkomponente bereits zugewiesen, zuweisbar und zuzuweisen sind,
- anhand der Information bezüglich der Identität der Anlagenkomponente und der Information über die zuweisbaren und zuzuweisenden Zertifikate zu bestimmen, welchen Typ der Zertifikatsantrag aufweist und welche Registrierungsstelle oder welche Zertifizierungsstelle der technischen Anlage für den Zertifikatsantrag zuständig ist,
- den Zertifikatsantrag der Anlagenkomponente mit einer Information über den Typ des Zertifikatsantrags an die zuständige Registrierungsstelle oder die zuständige Zertifizierungsstelle zu übermitteln.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten einer technischen Fertigungs- oder Produktionsanlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber kann das Leitsystem u.a. Mittel zur Visualisierung der technischen Anlage und zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Unter einem Zertifikat wird ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Der Zertifikatsantrag kann ein initialer Antrag einer Anlagenkomponente sein, d.h. ein erstmaliges Bestreben, ein Zertifikat von der Zertifizierungsstelle zu erhalten (um beispielsweise mit anderen Anlagenkomponenten der technischen Anlage kommunizieren zu können). Bei dem Zertifikatsantrag kann es sich aber auch um einen Antrag zur Erneuerung eines bereits zuvor ausgestellten Zertifikats handeln, dessen Gültigkeit abgelaufen ist oder dessen Ablauf bevorsteht.

Der Zertifikatsantrag weist wenigstens eine Information über eine Identität der antragsstellenden Anlagenkomponente auf. Diese Information nutzt der Registrierungsdienst und ruft aus einem Speicher Informationen darüber ab, welche Zertifikate der Anlagenkomponente bereits zugewiesen, (überhaupt) zuweisbar und zuzuweisen sind. Durch die Verknüpfung der Informationen bezüglich der Identität der Anlagenkomponente und der aus dem Speicher abgerufenen Informationen kann der Registrierungsdienst bestimmen, welchen Typ der Zertifikatsantrag aufweist. Dadurch weiß er mit anderen Worten, ob es sich um einen initialen Zertifikatsantrag oder um eine Zertifikatserneuerung handelt. Zusätzlich ist der Registrierungsdienst dazu ausgebildet, die zuvor ermittelten Informationen dazu zu verwenden, zu ermitteln, welche Registrierungsstelle (engl. Registration Authority, kurz: RA) oder welche Zertifizierungsstelle (engl. Certification Authority, kurz: CA) der technischen Anlage für den Zertifikatsantrag zuständig ist.

Der Registrierungsdient passt den Zertifikatsantrag der Anlagenkomponente daraufhin mit der Information über den Typ des Zertifikatsantrags an und übermittelt den Zertifikatsantrag an die zuständige Registrierungsstelle oder die zuständige Zertifizierungsstelle der technischen Anlage. Mithilfe des Registrierungsdienstes des Leitsystems können daher in einem rudimentären Format (z.B. im PKCS#10-Format) vorliegende Zertifikatsanträge oder "Rohdaten", aus welchen die wesentlichen Informationen hinsichtlich der Identität des Antragstellers (wie z.B. seinen Namen, seine ID, die beispielsweise in Form einer Seriennummer oder einer Product Instance URI vorliegen kann, entnommen werden, adäquat konvertiert und an den korrekten Adressaten weitergeleitet werden.

Zusätzlich ermöglicht es das erfindungsgemäße Leitsystem einer Anlagenkomponente mittels des Registrierungsdienstes ihre Zertifikatsanträge direkt an die für sie zuständige Zertifizierungsstelle zu richten (ohne dass hierfür aufwändige manuelle Eingriffe von Administratoren der technischen Anlage notwendig wären).

Der Registrierungsdienst kann auf einer Komponente einer Public Key Infrastruktur wie einer lokalen Registrierungsstelle computerimplementiert sein. Er kann aber auch auf einem Endgerät der technischen Anlage, insbesondere auf einer Netzwerkkomponente wie einem Switch oder einer Firewallkomponente, computerimplementiert sein. Mit dem Begriff "Public Key Infrastruktur" (kurz: PKI) wird eine Sicherheitsinfrastruktur für eine technische Anlage verbunden, die Services für einen sicheren Austausch von Daten zwischen Kommunikationspartnern der technischen Anlage bereitstellt. Mit Hilfe der Public Key Infrastruktur lassen sich Zertifikate ausstellen, verteilen und prüfen.

Im Rahmen einer vorteilhaften Weiterbildung der Erfindung weist der Registrierungsdienst Vertrauensbeziehungen zu der Anlagenkomponente und zu der oder den Registrierungsstellen und/oder Zertifizierungsstellen der technischen Anlage auf, wobei die Vertrauensbeziehungen vorzugsweise zertifikatsbasiert ausgebildet sind. Dadurch kann der Registrierungsdienst sicher und effizient die zuvor erläuterten Konvertierungs- und Weiterleitungsdienste vornehmen.

Vorzugsweise ist der Registrierungsdienst dazu ausgebildet, dem ersten Speicher oder einem zweiten Speicher die Information zu entnehmen, welche Registrierungsstelle oder welche Zertifizierungsstelle der technischen Anlage für den Zertifikatsantrag zuständig ist. Die Information über die Zuständigkeiten kann demselben (ersten) Speicher entnommen werden, der, wie zuvor erläutert, auch die Informationen darüber umfasst, welche Zertifikate der Anlagenkomponente zugewiesen, zuweisbar und zuzuweisen sind. Die Information über die Zuständigkeiten kann aber auch auf einem zweiten Speicher hinterlegt sein. Sowohl der erste als auch der zweite Speicher können sich (physisch) innerhalb der technischen Anlage befinden. Es ist aber auch möglich, dass der erste und/oder der zweite Speicher in einer cloudbasierten Umgebung (physisch außerhalb der technischen Anlage) realisiert sind.

Der erste und/oder der zweite Speicher können besonders bevorzugt auf einer Komponente einer Public Key Infrastruktur, insbesondere einer Registrierungsstelle, auf einem Engineering Station Server oder auf einem Operator Station Server des Leitsystems, oder auf einem Endgerät der technischen Anlage, insbesondere einer Netzwerkkomponente oder einem Automatisierungsgerät, implementiert sein.

Unter einem "Engineering Station Server" wird vorliegend ein Server verstanden, der dazu ausgebildet ist, verschiedene Hardware- und Software-Projekte für ein Leitsystem einer technischen Anlage zu erstellen, verwalten, archivieren und dokumentieren. Mithilfe von speziellen Software-Entwurfswerkzeugen (Engineering Toolset) sowie vorgefertigten Bausteinen und Plänen kann mittels des Engineering Station Servers ein Zusammenspiel von leittechnischen Geräten und Einrichtungen der technischen Anlage geplant und verwaltet werden. Ein Beispiel hierfür ist ein SIMATIC Manager Server der Firma SIEMENS.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Automatisierungsgeräte werden zur Realisierung einer Automatisierung benutzt und können beispielsweise speicherprogrammierbare Steuerungen sein, die eine übergeordnete Steuerungsfunktion für untergeordnete speicherprogrammierbare Steuerungen darstellen.

Die Aufgabe wird zudem gelöst durch ein Verfahren zum Übermitteln eines Zertifikatsantrags von einer Anlagenkomponente einer technischen Anlage, insbesondere einer Prozess- oder Fertigungsanlage, die einen computerimplementierten Registrierungsdienst aufweist, an eine Registrierungsstelle oder eine Zertifizierungsstelle der technischen Anlage, das Verfahren umfassend:
- Entgegennehmen eines Zertifikatsantrags von einer Anlagenkomponente der technischen Anlage durch den Registrierungsdienst, wobei der Zertifikatsantrag eine Information bezüglich einer Identität der Anlagenkomponente umfasst,
- Entnehmen einer Information aus einem ersten Speicher durch den Registrierungsdienst, darüber, welche Zertifikate der Anlagenkomponente zuweisbar und zuzuweisen sind,
- Anhand der Information bezüglich der Identität der Anlagenkomponente und der Information über die bereits zugewiesenen, zuweisbaren und zuzuweisenden Zertifikate Bestimmen durch den Registrierungsdienst, welchen Typ der Zertifikatsantrag aufweist und welche Registrierungsstelle oder welche Zertifizierungsstelle der technischen Anlage für den Zertifikatsantrag zuständig ist,
- Übermitteln des Zertifikatsantrags der Anlagenkomponente zusammen mit einer Information über den Typ des Zertifikatsantrags an die zuständige Registrierungsstelle oder die zuständige Zertifizierungsstelle durch den Registrierungsdienst.

Die Aufgabe wird zudem gelöst durch die Verwendung eines Leitsystems wie zuvor erläutert zum Betrieb einer technischen Anlage, insbesondere einer Fertigungs- oder Prozessanlage.

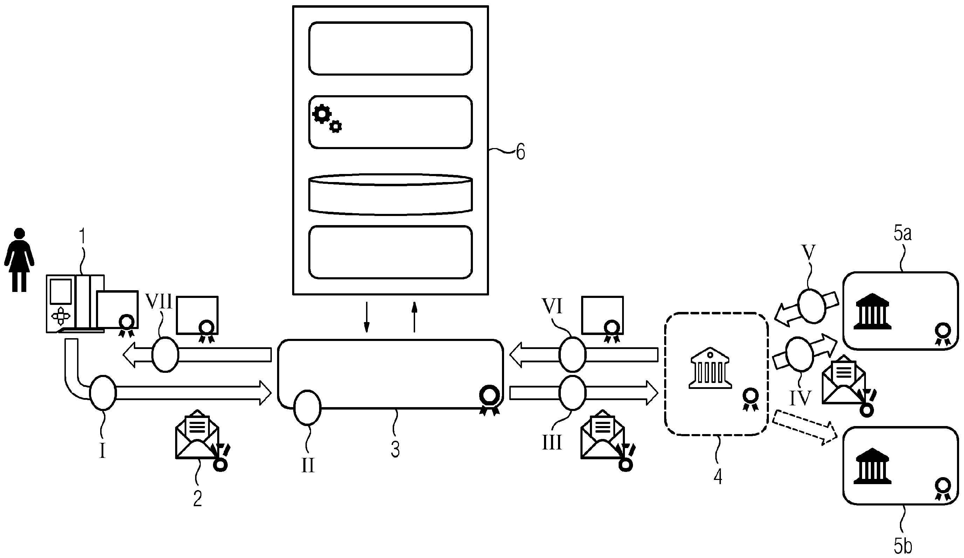

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein erfindungsgemäßes Verfahren schematisch dargestellt. Eine Anlagenkomponente 1 stellt in einem ersten Schritt (I) einen Zertifikatsantrag 2 in dem PKCS#10 Format. Ein Registrierungsdienst 3 eines Leitsystems einer technischen Anlage empfängt den Zertifikatsantrag 2 der Anlagenkomponente 1. Der Registrierungsdienst 3 weist auf Zertifikaten basierende Vertrauensbeziehungen zu einer Registrierungsstelle 4 und zu zwei Zertifizierungsstellen 5a, 5b der technischen Anlage auf.

Der Registrierungsdienst 3 entnimmt dem Zertifikatsantrag 2 eine Information über eine Identität der Anlagenkomponente 1. Daraufhin greift der Registrierungsdienst 3 auf einen in der technischen Anlage implementierten Konfigurationsspeicher 6 zu, um Informationen darüber zu entnehmen, welche Zertifikate der Anlagenkomponente 1 bereits zugewiesen, zuweisbar und zuzuweisen sind. Zusätzlich ruft der Registrierungsdient 3 Information aus dem Konfigurationsspeicher 6 ab, welche Registrierungsstelle 4 oder welche Zertifizierungsstelle 5a, 5b der technischen Anlage für den Zertifikatsantrag 2 zuständig ist. Der Konfigurationsspeicher 6 ist dabei auf einem Engineering Station Server des Leitsystems implementiert. Die verschiedenen Zertifizierungsstellen 5a, 5b können jeweils für verschiedene Typen von Zertifikaten zuständig sein.

Der Registrierungsdienst 3 verwendet nun die aus dem Konfigurationsspeicher 6 abgerufenen Informationen dazu, den Zertifikatsantrag 2 von dem rudimentären PKCS#10 Format in ein umfassenderes Format zu transformieren (beispielsweise das CMP-Protokoll), welches einen Typ des Zertifikatsantrags 2 umfasst (Schritt II). Die Kriterien für die Transformation des Zertifikatsantrags können dabei fest von einem Administrator der technischen Anlage oder dergleichen oder adaptiv von einem selbstlernenden System vorgegeben werden.

In einem nachfolgenden Schritt (III) wird der umfassendere Zertifikatsantrag 2 an die Registrierungsstelle 5 weitergeleitet, welche in einem weiteren Schritt (IV) den Zertifikatsantrag 2 an die in diesem Fall zuständige Zertifizierungsstelle 5a weiterleitet.

Nach der Prüfung des Zertifikatsantrags 2 und der Ausstellung des beantragten Zertifikats wird in darauffolgenden Schritten (V, VI, VII) das ausgestellte Zertifikat an die beantragende Anlagenkomponente 1 weitergereicht.

Dadurch dass eine Mitwirkung des Benutzers bei der Konvertierung der Zertifikatsanträge durch die zuvor erläuterten technischen Merkmale wegfällt, entfallen auch die damit verbundenen, im einleitenden Teil beschriebenen Risiken. Dadurch kann die Erfindung zu einer verbesserten Automatisierung des Zertifikatsmanagements einer technischen Anlage, zu einem unterbrechungsfreien Normalbetrieb sowie zu einer verbesserten Verfügbarkeit von heterogenen technischen Anlagen beigetragen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem für eine technische Anlage, insbesondere eine Prozess- oder Fertigungsanlage, das einen computerimplementierten Registrierungsdienst (3) aufweist, wobei der Registrierungsdienst (3) dazu ausgebildet ist:
- von einer Anlagenkomponente (1) der technischen Anlage einen Zertifikatsantrag (2) entgegenzunehmen, der eine Information bezüglich einer Identität der Anlagenkomponente (1) umfasst,
- einem ersten Speicher (6) eine Information darüber zu entnehmen, welche Zertifikate der Anlagenkomponente (1) bereits zugewiesen, zuweisbar und zuzuweisen sind,
- anhand der Information bezüglich der Identität der Anlagenkomponente (1) und der Information über die zuweisbaren und zuzuweisenden Zertifikate zu bestimmen, welchen Typ der Zertifikatsantrag (2) aufweist und welche Registrierungsstelle (4) oder welche Zertifizierungsstelle (5a, 5b) der technischen Anlage für den Zertifikatsantrag (2) zuständig ist,
- den Zertifikatsantrag (2) der Anlagenkomponente (1) mit einer Information über den Typ des Zertifikatsantrags (2) an die zuständige Registrierungsstelle (4) oder die zuständige Zertifizierungsstelle (5a, 5b) zu übermitteln.

2. Leitsystem nach Anspruch 1, bei dem der Registrierungsdienst (3) auf einer Komponente einer Public Key Infrastruktur der technischen Anlage computerimplementiert ist.

3. Leitsystem nach Anspruch 1 oder 2, bei dem der Registrierungsdienst (3) auf einem Endgerät der technischen Anlage, insbesondere auf einer Netzwerkkomponente wie einem Switch oder einer Firewallkomponente, computerimplementiert sind.

4. Leitsystem nach einem der vorangegangenen Ansprüche, bei dem der Registrierungsdienst (3) Vertrauensbeziehungen zu der Anlagenkomponente und zu der oder den Registrierungsstellen (4) und/oder Zertifizierungsstellen (5a, 5b) der technischen Anlage aufweist, wobei die Vertrauensbeziehungen vorzugsweise zertifikatsbasiert ausgebildet sind.

5. Leitsystem nach einem der vorangegangenen Ansprüche, bei dem der Registrierungsdienst (3) dazu ausgebildet ist, dem ersten Speicher (6) oder einem zweiten Speicher die Information zu entnehmen, welche Registrierungsstelle (4) oder welche Zertifizierungsstelle (5a, 5b) der technischen Anlage für den Zertifikatsantrag (2) zuständig ist.

6. Leitsystem nach Anspruch 5, bei dem der erste Speicher (6) oder der zweite Speicher auf einer Komponente einer Public Key Infrastruktur, insbesondere einer Registrierungsstelle (4), implementiert sind.

7. Leitsystem nach Anspruch 5, bei dem der erste Speicher (6) oder der zweite Speicher auf einem Engineering Station Server oder auf einem Operator Station Server des Leitsystems implementiert sind.

8. Leitsystem nach Anspruch 5, bei dem der erste Speicher oder der zweite Speicher auf einem Endgerät der technischen Anlage, insbesondere einer Netzwerkkomponente oder einem Automatisierungsgerät, implementiert sind.

9. Verfahren zum Übermitteln eines Zertifikatsantrags von einer Anlagenkomponente (1) einer technischen Anlage, insbesondere einer Prozess- oder Fertigungsanlage, die einen computerimplementierten Registrierungsdienst (3) aufweist, an eine Registrierungsstelle (4) oder eine Zertifizierungsstelle (5a, 5b) der technischen Anlage, das Verfahren umfassend:
- Entgegennehmen eines Zertifikatsantrags (2) von einer Anlagenkomponente (1) der technischen Anlage durch den Registrierungsdienst (3), wobei der Zertifikatsantrag (2) eine Information bezüglich einer Identität der Anlagenkomponente (1) umfasst,
- Entnehmen einer Information aus einem ersten Speicher (6) durch den Registrierungsdienst (3), darüber, welche Zertifikate der Anlagenkomponente (1) zuweisbar und zuzuweisen sind,
- Anhand der Information bezüglich der Identität der Anlagenkomponente (1) und der Information über die bereits zugewiesenen, zuweisbaren und zuzuweisenden Zertifikate Bestimmen durch den Registrierungsdienst (3), welchen Typ der Zertifikatsantrag (2) aufweist und welche Registrierungsstelle (4) oder welche Zertifizierungsstelle (5a, 5b) der technischen Anlage für den Zertifikatsantrag (2) zuständig ist,
- Übermitteln des Zertifikatsantrags (2) der Anlagenkomponente (1) zusammen mit einer Information über den Typ des Zertifikatsantrags (2) an die zuständige Registrierungsstelle (4) oder die zuständige Zertifizierungsstelle (5a, 5b) durch den Registrierungsdienst (3).

10. Verfahren nach Anspruch 9, bei dem der Registrierungsdienst (3) auf einer Komponente einer Public Key Infrastruktur der technischen Anlage computerimplementiert ist.

11. Verfahren nach Anspruch 9 oder 10, bei dem der Registrierungsdienst (3) auf einem Endgerät der technischen Anlage, insbesondere einer Netzwerkkomponente wie einem Switch oder einer Firewallkomponente, computerimplementiert ist.

12. Verfahren nach einem der Ansprüche 9 bis 11, bei dem der Registrierungsdienst (3) Vertrauensbeziehungen zu der Anlagenkomponente (1) und zu der oder den Registrierungsstellen (4) und/oder Zertifizierungsstellen (5a, 5b) der technischen Anlage aufweist, wobei die Vertrauensbeziehungen vorzugsweise zertifikatsbasiert ausgebildet sind.

13. Verfahren nach einem der Ansprüche 9 bis 12, bei dem der Registrierungsdienst (3) dem ersten Speicher (6) oder einem zweiten Speicher die Information entnimmt, welche Registrierungsstelle (4) oder welche Zertifizierungsstelle (5a, 5b) der technischen Anlage für den Zertifikatsantrag (2) zuständig ist.

14. Verfahren nach einem der Ansprüche 9 bis 13, bei dem der erste Speicher (6) oder der zweite Speicher auf einer Komponente einer Public Key Infrastruktur, insbesondere einer Registrierungsstelle (4), implementiert sind.

15. Verfahren nach einem der Ansprüche 9 bis 13, bei dem der erste Speicher oder der zweite Speicher auf einem Engineering Station Server oder auf einem Operator Station Server des Leitsystems implementiert sind.

16. Verfahren nach einem der Ansprüche 9 bis 13, bei dem der erste Speicher oder der zweite Speicher auf einem Endgerät der technischen Anlage, insbesondere einem Automatisierungsgerät oder einer Netzwerkkomponente, implementiert sind.

17. Verwendung eines Leitsystems nach einem der Ansprüche 1 bis 8 zum Betrieb einer technischen Anlage, insbesondere einer Fertigungs- oder Prozessanlage.
